(19) Europäisches Patentamt / European Patent Office / Office européen des brevets

(11) **EP 2 812 107 B1**

(12) **EUROPEAN PATENT SPECIFICATION**

(45) Date of publication and mention
of the grant of the patent:
**31.03.2021 Bulletin 2021/13**

(21) Application number: **13712935.9**

(22) Date of filing: **18.01.2013**

(51) Int Cl.:
*B01J 8/04* (2006.01)          *B01J 8/00* (2006.01)
*C01B 3/38* (2006.01)          *C01B 3/58* (2006.01)

(86) International application number:
**PCT/JP2013/000218**

(87) International publication number:
**WO 2013/118430 (15.08.2013 Gazette 2013/33)**

(54) **FUEL PROCESSOR**

BRENNSTOFFPROZESSOR

CONVERTISSEUR DE COMBUSTIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.02.2012 JP 2012025645**

(43) Date of publication of application:
**17.12.2014 Bulletin 2014/51**

(73) Proprietor: **Panasonic Intellectual Property
Management Co., Ltd.**
**Osaka-shi, Osaka 540-6207 (JP)**

(72) Inventors:
• **MITA, Yuki**
**Chuo-ku, Osaka 540-6207 (JP)**

• **KITA, Hiromi**
**Chuo-ku, Osaka 540-6207 (JP)**

(74) Representative: **Grünecker Patent- und
Rechtsanwälte
PartG mbB
Leopoldstraße 4
80802 München (DE)**

(56) References cited:
**EP-A1- 1 650 159          WO-A1-2004/101125
JP-A- 2011 178 613          US-A1- 2004 144 029
US-A1- 2007 151 152**

**Description**

**Technical Field**

The present invention relates to a fuel processor that steam reforms hydrocarbon source gas such as town gas and LPG to manufacture hydrogen-rich reformed gas, and is used for manufacturing fuel gas for a fuel cell power generator and so on.

**Background Art**

A conventional fuel processor is entirely cylindrical. A known fuel processor includes a heater containing a burner at the center, a reformer filled with a reforming catalyst around the heater, a converter filled with a carbon monoxide (CO) converter catalyst, and a CO remover filled with a carbon monoxide (CO) removal catalyst. These components re arranged in the axial direction (for example, see Patent Literature 1).

In the fuel processor, source gas and reformed water are supplied into a gas passage acting as an evaporator around the heater, and then source gas and steam are supplied into the reformer. Moreover, hydrogen containing gas fed from the reformer is sequentially supplied to the converter provided around the gas passage, and the CO remover. Thus, reformed gas is produced.

FIG. 22 illustrates the fuel processor described in Patent Literature 1.

A fuel processor 1 is entirely cylindrical and is insulated by a heat insulating material 1a covering the outer surface of the fuel processor 1. A heating unit 5 is provided at the center of the fuel processor 1. The heating unit 5 includes a heat chamber 3 containing a burner 2, and an exhaust passage 4 provided around the heat chamber 3. An outlet port 4a of the exhaust passage 4 is opened to the outside. A first gas passage 6 acting as an evaporator is disposed around the outlet port 4a of the exhaust passage 4 of the heating unit 5. Near a flow of high-temperature exhaust gas 74 from the heat chamber 3 of the exhaust passage 4, a reforming part 8 filled with a reforming catalyst 7 is disposed around the exhaust passage 4. A second gas passage 9 for passing hydrogen containing gas 73 from the reforming part 8 to the outer surface of the first gas passage 6 is disposed around the reforming part 8. A converting part 11 filled with a CO converter catalyst 10 is disposed near the reforming part 8 provided around the first gas passage 6. A CO removing part 14 filled with a CO removal catalyst 13 is disposed away from the reforming part 8 on the outer surface of the first gas passage 6 and outside a third gas passage 12 in the radial direction.

Source gas 70 supplied to an inlet 6a of the first gas passage 6 is mixed at the inlet 6a of the first gas passage 6 with reformed water 72 supplied through a heating coil 15 wound around the converting part 11 and the CO removing part 14. The source gas 70 and the reformed water 72 are heated through the first gas passage 6 acting as an evaporator. The high-temperature source gas 70 and steam are supplied to the reforming part 8, and then the source gas 70 is steam reformed by the action of the reforming catalyst 7 into the hydrogen containing gas 73.

The hydrogen containing gas 73 fed from the reforming part 8 is supplied to the converting part 11 through the second gas passage 9, and then carbon monoxide (CO) in gas is reduced by the action of the CO converter catalyst 10. The hydrogen containing gas 73 fed from the converting part 11 is mixed with air 71, which is introduced from an air inlet port 16a, in the air mixing space of a mixing part 16 provided between the converting part 11 and the third gas passage 12. The hydrogen containing gas 73 mixed with the air 71 is supplied to the CO removing part 14 through the third gas passage 12, CO is removed by the action of the CO removal catalyst 13, and then the hydrogen containing gas 73 is fed from a hydrogen containing gas outlet port 17.

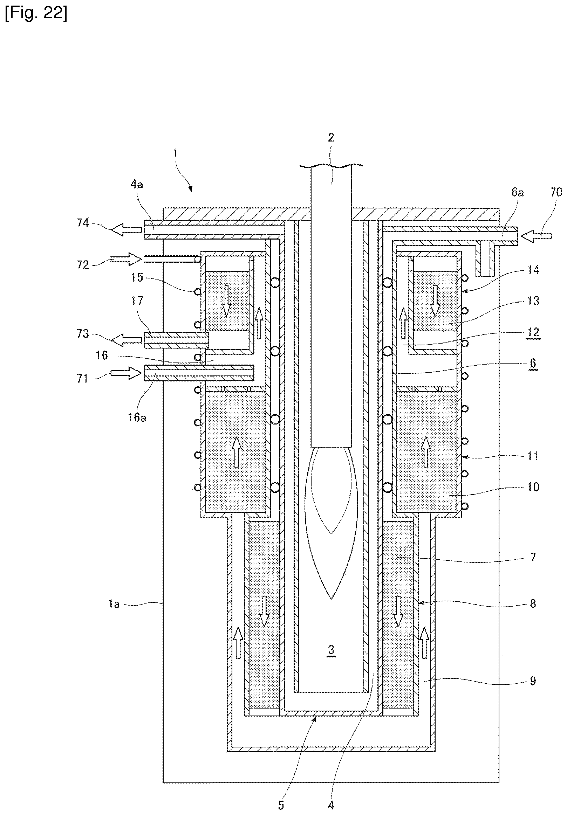

The fuel processor 1 shown in FIG. 22 has the third gas passage 12 interposed between the CO removing part 14 and the first gas passage 6 at a high temperature. Thus, a temperature downstream of the converting part 11 can be kept at an optimum temperature for a reaction (e.g., 200 degrees C); meanwhile, the inlet temperature of the CO removing part 14 can be kept at a temperature (e.g., 150 degrees C) where an oxidation reaction is not excessively accelerated. In other words, the converting part 11 and the CO removing part 14 can be advantageously kept at a suitable temperature.

Carbon monoxide CO is removed from the CO removal catalyst 13 by the following chemical reaction:

$$2CO + O_2 \rightarrow 2CO_2$$

In this case, the hydrogen containing gas 73 containing carbon monoxide CO and the air 71 containing oxygen $O_2$ need to be sufficiently mixed. In the case of insufficient mixing, the chemical reaction is not accelerated, precluding sufficient removal of CO.

For sufficient mixing, the air mixing space and the air inlet port 16a of the mixing part 16 are provided with complicated shapes or the third gas passage 12 is extended. However, such configurations for improving mixing are likely to increase a pressure loss. Moreover, such shapes lead to a larger volume of the air mixing space of the mixing part 16, thereby increasing heat radiation with lower efficiency and higher manufacturing cost.

A fuel processor in Patent Literature 2 proposes a shape of a mixing part for solving the problem.

FIG. 23 illustrates the mixing part of the fuel processor described in Patent Literature 2.

A mixing passage 100 includes a pipe-shaped gas supply region 110, a gas diffusion region 120, gas supply ports 111 that are holes on the side of the gas supply region 110, and an air inlet port 101 at the starting end of the gas supply region 110.

Air flowing from the air inlet port 101 and hydrogen containing gas flowing from the gas supply ports 111 are mixed in the gas supply region 110 and the gas diffusion region 120.

In the gas supply region 110, jets of hydrogen containing gas from the gas supply ports 111 cause eddy formation, accelerating mixing of hydrogen containing gas and air. The gas diffusion region 120 includes a region for diffusing the gas and air so as to further accelerate the mixing. Thus, the mixing can be efficiently completed.

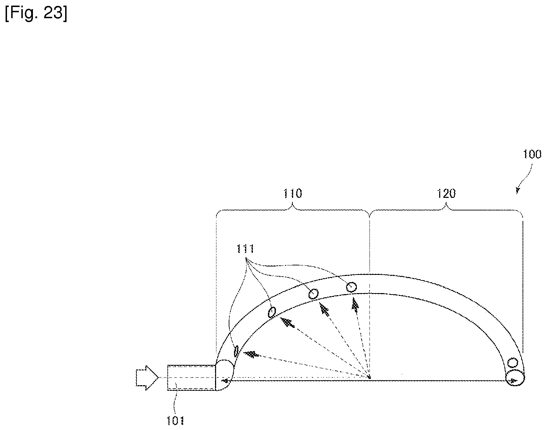

In the mixing part of FIG. 23, gas is supplied through the gas supply ports into the gas supply region 110 for an air flow, suppressing a flow rate upstream of the passage. Hence, a pressure loss can be smaller than that of a jet of hydrogen containing gas.

Patent Literature 3 and Patent Literature 4 describe similar fuel processors.

US 2007/151152 relates to a hydrogen generating apparatus having a gas mixing passage. US 2004/144029 relates to a cylindrical water vapor reforming unit having a plurality of cylindrical bodies consisting of a first cylindrical body, a second cylindrical body and a third cylindrical body of successively increasing diameters disposed in a concentric spaced relation. WO 2004/101125 A1 relates to a device for homogenization of fluid flow.

**Citation List**

**Patent Literature**

  PTL1: Japanese Patent No. 4536153
  PTL2: Japanese Patent No. 4542205
  PTL3: Japanese Patent Laid-Open No. 2002-187705
  PTL4: Japanese Patent Laid-Open No. 2011-178613

**Summary of Invention**

**Technical Problem**

However, the mixing passage in FIG. 23 has a complicated shape and thus requires working for bending the pipe of the passage into an arc, working for forming the many holes, working for bending the passage to a right angle, and so on, which may increase the cost of components.

In order to prevent leakage and damage during a long operation, the components are desirably fixed to each other by, for example, continuous welding. However, such complicated shapes are hard to automatically weld and thus need to be manually welded, resulting in lower yields with a large number of manufacturing steps.

In the case of the mixing passage in FIG. 23, it is confirmed that a maximum mixing distance is about 180 mm and mixing is sufficiently completed in a steady state. In a non-steady state caused by a failure, an allowance for capability of completing mixing is small. As a result of the simulation on Patent Literature 2, carbon monoxide CO and oxygen $O_2$ are evenly distributed near the terminal end of the mixing passage.

For example, in the case where the reforming catalyst 7 of the reforming part 8 and the CO converter catalyst 10 of the converting part 11 are powdered by aged deterioration so as to interrupt the gas passage, the flow rate of the hydrogen containing gas 73 increases. In this case, the catalysts cannot be sufficiently mixed in the mixing passage. Alternatively, in the case where the activity of the CO converter catalyst 10 in the converting part 11 is deteriorated by aged deterioration, CO contained in the hydrogen containing gas 73 cannot be sufficiently reduced. Thus, a CO concentration of 0.5% or less cannot be obtained that is set as an upper limit during the design of the CO removing part 14. In this case, oxygen $O_2$ cannot be sufficiently mixed with increased CO.

As a result, CO may not be sufficiently removed from the CO removal catalyst 13 of the CO removing part 14. In this case, the hydrogen containing gas 73 containing a high concentration of CO (at least 0.5%) is supplied to a power generation stack and the catalyst in the stack is poisoned (catalyst poisoning) so as to reduce power generation capacity, leading to system shutdown.

In the case where the mixing part is sufficiently capable of completing mixing, an operation can be performed up to a system life determined by the amount of the catalyst. In the configuration of the mixing passage of FIG. 23, however, it is difficult to extend the mixing passage in view of assembling and a space. Even if the mixing passage can be extended, the cost and pressure loss may be considerably increased.

An object of the present invention is to provide a fuel processor that is inexpensively configured with a small number of manufacturing steps, obtains a mixing passage with a sufficient distance without increasing a pressure loss, and includes a mixing part with high mixing capability.

**Solution to Problem**

A fuel processor according to the present invention is defined in claims 1 and 2.

**Advantageous Effects of Invention**

With this configuration, the air mixing space of the mixing part is divided into the outer passage and the inner passage by the partition plate. Thus, the configuration is inexpensive and requires only a small number of manufacturing steps, and a mixing passage can be obtained with a sufficient distance without increasing a pressure loss, thereby exhibiting high mixing capability.

**Brief Description of Drawings**

[FIG. 1] FIG. 1 is a longitudinal section illustrating the mixing part of a fuel processor according to a first embodiment.
[FIG. 2] FIG. 2 is a cross-sectional view taken along line A-A of FIG. 1.
[FIG. 3] FIG. 3 is an external perspective view illustrating a partition plate according to the first embodiment.
[fig.4]FIG. 4 shows the analysis results of the fuel processor according to the first embodiment.
[fig.5]FIG. 5 is a cross-sectional view illustrating the step of assembling the mixing part according to the first embodiment.
[fig.6]FIG. 6 is a longitudinal section illustrating a mixing part in a fuel processor according to a second embodiment.
[fig.7]FIG. 7 is a cross-sectional view taken along line J-J of FIG. 6.
[fig.8]FIG. 8 is a longitudinal section illustrating a mixing part in a fuel processor according to a third embodiment.
[fig.9]FIG. 9 is a cross-sectional view taken along line K-K of FIG. 8.
[fig. 10] FIG. 10 is an external perspective view illustrating a partition plate according to the third embodiment.
[fig. 11]FIG. 11 is a cross-sectional view illustrating the step of assembling the mixing part according to the third embodiment.
[fig.12]FIG. 12 is a longitudinal section illustrating a mixing part in a fuel processor according to a fourth embodiment.
[fig.13]FIG. 13 is a cross-sectional view illustrating the step of assembling the mixing part according to the fourth embodiment.
[fig.14]FIG. 14 is a longitudinal section illustrating a mixing part in a fuel processor according to a fifth embodiment.
[fig.15]FIG. 15 is a cross-sectional view illustrating the step of assembling the mixing part according to the fifth embodiment.
[fig.16]FIG. 16 is a longitudinal section illustrating a mixing part in a fuel processor according to a sixth embodiment.
[fig. 17]FIG. 17 is a plan view illustrating a partition plate according to the sixth embodiment.
[fig.18]FIG. 18 is a longitudinal section illustrating a mixing part in a fuel processor according to a seventh embodiment.
[fig.19]FIG. 19 is a cross-sectional view illustrating the step of assembling the mixing part according to the seventh embodiment.
[fig.20]FIG. 20 is a plan view illustrating a partition plate according to an eighth embodiment.

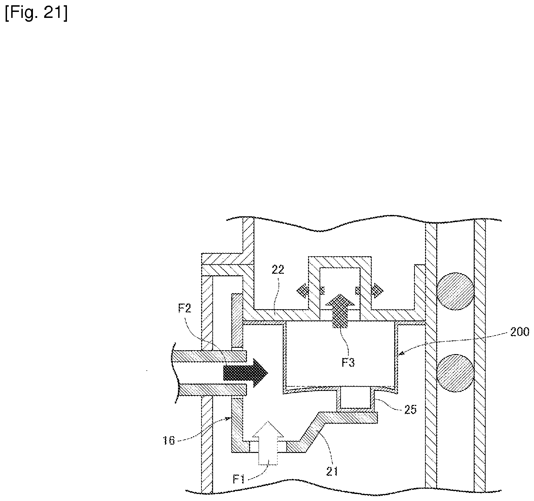

[fig.21]FIG. 21 is a plan view illustrating a partition plate
[fig.22]FIG. 22 is a longitudinal section illustrating a fuel processor of a conventional example described in Patent Literature 1.
[fig.23]FIG. 23 is a plan view illustrating a mixing part in a fuel processor described in Patent Literature 2.

**Description of Embodiments**

(First Embodiment)

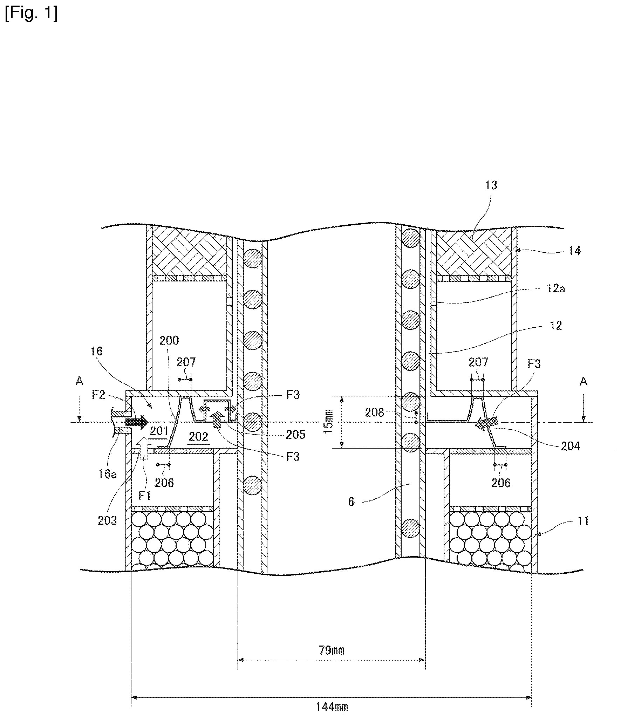

FIGS. 1 to 5 illustrate a first embodiment of the present invention.

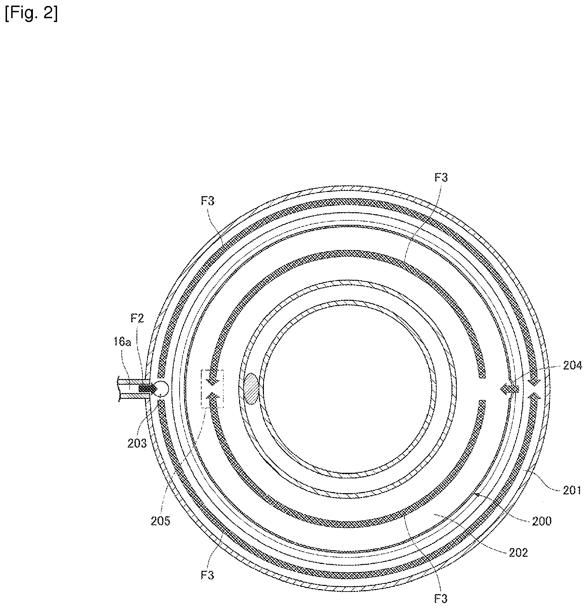

FIG. 1 is a longitudinal section of a fuel processor. FIG. 2 is a cross-sectional view taken along the line A-A of FIG. 1. The cross-sectional view basically illustrates only a cross section. Only a gas inlet port 203 is illustrated as a projected shape for explanation.

In FIGS. 1 and 2, components having the same functions as the fuel processor in the conventional example in FIGS. 22 and 23 are indicated by the same reference numerals, and the explanation thereof is omitted. A hollow arrow F1 indicates a flow of reformed hydrogen containing gas, a black arrow F2 indicates an air flow, and a cross hatching arrow F3 indicates a flow of mixed gas.

In the conventional example, in FIG. 22, to mix the hydrogen containing gas 73 with the air 71, the air mixing space of the mixing part 16 provided between the converting part 11 and the third gas passage 12 does not contain any partitions, whereas in the first embodiment, the air mixing space of a mixing part 16 is divided into an outer passage 201 and an inner passage 202 by a partition plate 200.

Air containing oxygen $O_2$ from an air inlet port 16a connected to a side wall flows into the air mixing space of the mixing part 16. Moreover, CO in hydrogen containing gas is reduced to a low concentration (0.5% or less) in a converting part 11, and then the hydrogen containing gas containing the low concentration of CO flows into the air mixing space of the mixing part 16 from the gas inlet port 203. The air and the hydrogen containing gas vertically collide with each other, and then are dispersed so as to start mixing. After that, as illustrated in FIG. 2, mixed gas having traveled halfway around the outer passage 201 passes through a side hole 204 formed on the side of the partition plate 200 and flows into the inner passage 202. The mixed gas further travels halfway through the inner passage 202, passes through a gas outlet 205, and then flows into a third gas passage 12. The gas is mixed through the outer passage 201 and the inner passage 202 and evenly flows into the third gas passage 12. After that, heat is exchanged with source gas containing water passing through a first gas passage 6, and then the gas is cooled (e.g., from 250 degrees C to 150 degrees C). The gas then passes through a third gas passage outlet port 12a and flows into a CO removing part 14, so that CO is substantially completely removed(for example, to 10 ppm or less).

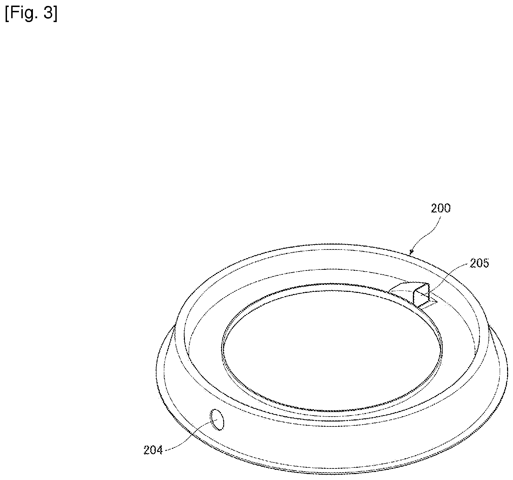

FIG. 3 is a perspective view illustrating a shape of the partition plate 200 in consideration of actual fabrication. The partition plate 200 can be produced as a single component only by press working. The size of the side hole 204 is set at 6 mm (about 28 $mm^2$) in diameter by optimization, which will be described later. The size of the side hole 204 can be optionally set in a working range. The gas outlet 205 is a cut and raised hole that is formed to circulate mixed gas in the third gas passage 12 so as to equalize flow velocities and flow rates in a circumferential direction before the gas reaches the third gas passage outlet port 12a and improve the use efficiency of a CO removal catalyst 13. Also in this configuration, the open area of the gas outlet 205 is about 30 $mm^2$ through optimization, which will be described later.

It is found that the sizes of the side hole 204 and the gas outlet 205 considerably affect a pressure loss but less affect mixing. In this configuration, the partition plate 200 is easily fabricated and the bore size is determined so as to keep a permissible pressure loss. A pressure loss is effectively reduced by increasing the sizes of the side hole 204 and the gas outlet 205.

The partition plate 200 is in contact with multiple points of a partition constituting the air mixing space of the mixing part 16. Specifically, as illustrated in FIG. 1, the partition plate 200 is in contact with three points: a first contact portion 206 on a bottom plate 21 serving as a first partition near the converting part 11; a second contact portion 207 on a top plate 22 serving as a second partition near the CO removing part 14; and an inner contact portion 208. In the event of a gap on these portions, unmixed gas may leak rearward in the passage, resulting in inefficient removal of CO. Such a gap is reliably prevented by fixing these contact portions by welding or brazing.

However, in the case where the first and second contact portions 206 and 207 only have a small clearance relative to the cross-sectional area of the passage (e.g., 1% or less), most of gas passes through the mixing passage due to a pressure difference. Thus, leakage hardly affects the overall mixed gas, allowing sufficient mixing of the gas through the third gas passage 12. Hence, the first and second contact portions 206 and 207 are not fixed by welding or brazing. The partition plate 200 is elastically deformed onto components constituting the air mixing space of the mixing part 16, thereby fully satisfying the function of the mixing passage.

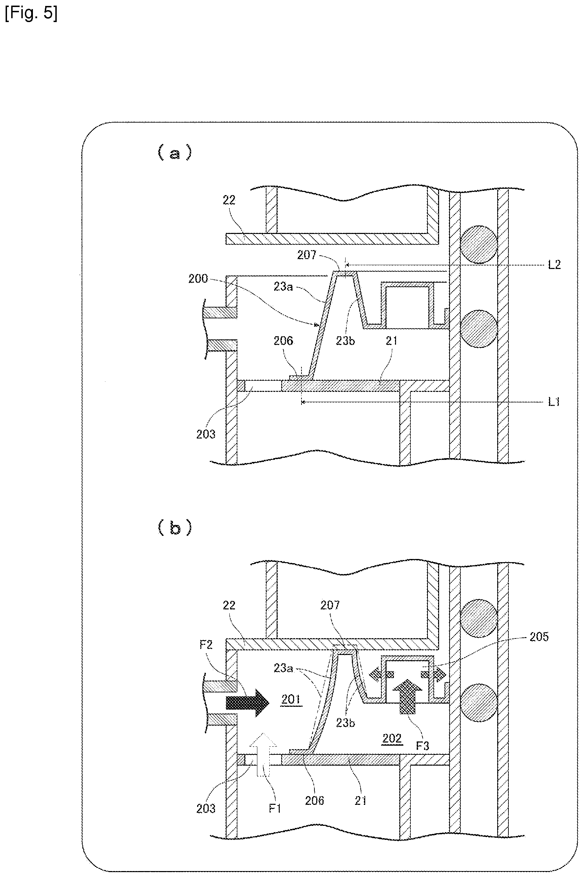

FIG. 5 illustrates the step of attaching the partition plate 200 into the mixing part 16.

FIG. 5(a) shows the partition plate 200 having been inserted into the outer periphery of a heating unit 5 before the CO removing part 14 is fixed. In this state, the inner contact portion 208 of the partition plate 200 is in contact with the outer surface of the heating unit 5, and the first contact portion 206 of the partition plate 200 is in contact with the bottom plate 21 of the mixing part 16.

When the CO removing part 14 is attached, as illustrated in FIG. 5(b), the second contact portion 207 of the partition plate 200 is pressed. The partition plate 200 is further pressed in a direction that reduces a clearance between the first contact portion 206 of the partition plate 200 and the bottom plate 21 of the mixing part 16 and a clearance between the second contact portion 207 of the partition plate 200 and the top plate 22 of the mixing part 16. In this case, the following relationships are obtained:

$$L1 \neq L2$$

$$L1 > L2$$

where L1 is a distance between the first contact portion 206 and the center of the heating unit 5, and L2 is a distance between the second contact portion 207 and the center of the heating unit 5. An outer tilted portion 23a is integrally formed between the first contact portion 206 and the second contact portion 207 of the partition plate 200. Since an inner tilted portion 23b is formed inside the second contact portion 207, the outer tilted portion 23a is elastically deformed from a virtual line position to a solid line position. The inner tilted portion 23b is also slightly elastically deformed.

The elastic deformation of the outer tilted portion 23a and the inner tilted portion 23b eliminates a difference in dimension between the height of the partition plate 200 and the inner height of the mixing part 16, and acts in a direction that reduces a clearance between the first contact portion 206 of the partition plate 200 and the bottom plate 21 of the mixing part 16 and a clearance between the second contact portion 207 of the partition plate 200 and the top plate 22 of the mixing part 16. In the state of FIG. 5(b), the top plate 22 of the mixing part 16 is joined and fixed to the converting part 11 by welding, brazing, and so on.

In the present embodiment, mixing capability equal to or higher than that of the configuration of FIG. 23 was obtained only by the partition plate 200 fabricated by press working, without additional fixation by welding and so on. Hence, the cost of components and the manufacturing steps were considerably reduced. In the present embodiment, elasticity was obtained by setting the thickness of the partition plate 200 at 0.3 mm relative to the structure having a thickness of 0.8 mm to 1.0 mm. Although the partition plate 200 is desirably made of a spring material, stainless was used instead as in the structure in consideration of heat resistance and cost. The partition plate 200 is fixed while being compressed by 0.1 mm to 0.3 mm in the axial direction, so that the first contact portion 206 is in contact with the outer surface of the converting part 11 and the second contact portion 207 is in contact with the outer surface of the CO removing part 14. The amount of compression may be, for example, about 1 mm. The inner contact portion 208 is radially fit to the first gas passage with a clearance of 0 mm to 0.4 mm. The contact portion is desirably brought into contact with the first gas passage by tube expansion or caulking, but fitting alone provides sufficient resistance to leakage.

The fitting configuration can reduce a stress applied to the structure as compared with fixation by welding and so on, even in the case where the fuel processor is repeatedly started and stopped to obtain heat shrinkage by heating and cooling. Thus, it is expected to prevent problems caused by fatigue breakdown in an extended period of use.

The mixing passage of this configuration has a length of about 380 mm. The mixing distance is at least two times larger than that of the configuration of the fuel processor in FIG. 23, that is, about 180 mm with an identical output and a substantially equal product outside diameter. Thus, stable mixing capability can be provided and high robustness is expected even under deteriorated conditions such as aged deterioration.

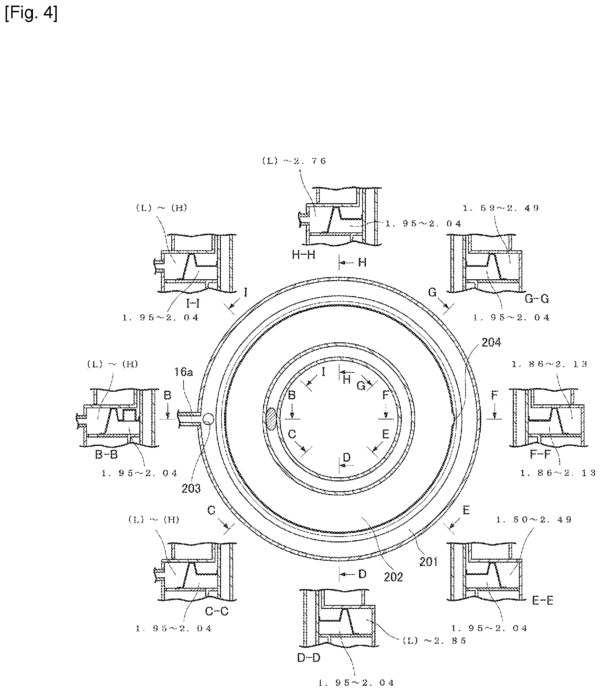

The effect of the first embodiment was examined using analysis results in FIG. 4. A three-dimensional model was used for the analysis. General-purpose thermal-liquid analysis software, "ANSYS FLUENT 12.1" of ANSYS, Inc. was used.

The flow rate of air was $7.67 * 10^{-6}$ kg/s, the air temperature was 25 degrees C, the flow rate of hydrogen containing gas was $1.69 * 10^{-4}$ kg/s, and the temperature of the hydrogen containing gas was 200 degrees C. The hydrogen containing gas contained 3.1% methane, 21.2% steam, 15.2% carbon dioxide, 0.2% carbon monoxide, and 60.3% hydrogen.

Mole ratios $O_2/CO$ of a concentration of oxygen $O_2$ to a concentration of carbon monoxide CO in mixed gas in the outer passage 201 and the inner passage 202 were measured at cross-sectional positions B-B, C-C, D-D, E-E, F-F, G-G, H-H, and I-I in the air mixing space of the mixing part 16 in FIG. 4.

| Cross-sectional position | Outer passage 201 | Inner passage 202 |
|---|---|---|
| B-B | (L)-(H) | 1.95-2.04 |
| C-C | (L)-(H) | 1.95-2.04 |
| D-D | (L)-2.85 | 1.95-2.04 |
| E-E | 1.95-2.04 | 1.50-2.49 |
| F-F | 1.86-2.13 | 1.86-2.13 |
| G-G | 1.59-2.49 | 1.95-2.04 |
| H-H | (L)-2.76 | 1.95-2.04 |
| I-I | (L)-(H) | 1.95-2.04 |

(H) is at least 3.30 and (L) is 1.50 or less.

In an analysis evaluation, a mole ratio $O_2/CO$ of a concentration of oxygen $O_2$ to a concentration of carbon monoxide CO was measured in a flow of mixed gas. Since $O_2$ is contained in the air and CO is contained in hydrogen containing gas, small variations in $O_2/CO$ indicate sufficient mixing. In requirements specifications determined by the characteristics of the CO removal catalyst, ratios $O_2/CO$ in mixed gas are within the range of 1.8 to 3.0.

Furthermore, in requirements specifications for a pressure loss determined by the performance of a pump, a pressure loss is suppressed to 500 Pa or less.

According to the analysis results, $O_2/CO$ values substantially converge in the outer passage 201 and stay within the range of 1.86 to 2.13 in the side hole 204. In other words, mixing is fully completed at this point. After that, the gas is further mixed through the inner passage 202 where $O_2/CO$ values converge within the range of 1.95 to 2.04 and hardly change. Thus, it was confirmed that this configuration has sufficient mixing capability and high robustness with a sufficient margin.

An analyzed pressure loss at this point was 402 Pa, which satisfied the specifications.

The side hole 204 and the gas outlet 205 were small in an initial design, and thus a pressure loss considerably exceeded a permissible value. The side hole 204 and the gas outlet 205 were then sequentially increased in size, which hardly affected mixing and smoothly reduced the pressure loss. Finally, the current size was set in view of balance with workability.

In the fitting configuration, manufacturing variations may cause clearances. Thus, a maximum amount of clearance was determined by repeated assembling. The first contact portion 206 on the outer surface of the converting part 11 had a maximum clearance of 0.2 mm, and the second contact portion 207 on the outer surface of the CO removing part 14 had a maximum clearance of 0.2 mm. The inner contact portion 208 on the first gas passage had a maximum clearance of 0.4 mm. These clearances were applied to a model as worst conditions although such a case may hardly be considered to actually occur, and then the model was analyzed. Consequently, the terminal end of the mixing passage had a value of 1.82 to 2.34, which satisfies the specifications. Thus, sufficient mixing capability can be obtained in the fitting configuration. A pressure loss decreases to 208 Pa in the worst conditions.

As an example, a fuel processor including the mixing part 16 of the first embodiment was actually fabricated to conduct an operation test. A CO concentration in produced hydrogen containing gas was 10 ppm or less, which means that CO was normally reduced. In a continuous operation of 4600 hours to the present time and 1570 start-stop tests, an abnormal CO concentration or an abnormal pressure loss was not found.

(Second Embodiment)

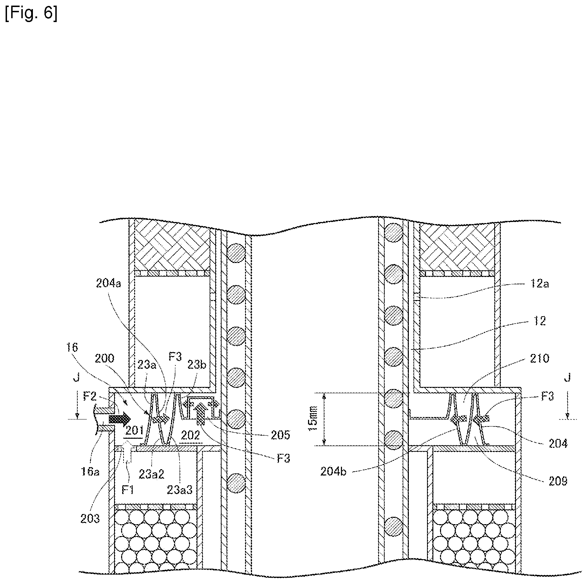

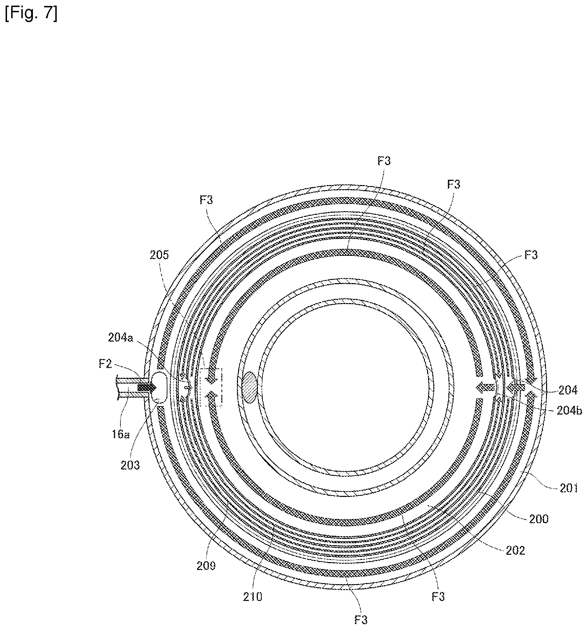

FIGS. 6 and 7 illustrate a second embodiment according to the present invention.

In the first embodiment, the mixing passage is divided into the outer passage 201 and the inner passage 202, whereas in the second embodiment, a mixing passage is divided into three or more passages (four passages in the present embodiment).

FIG. 6 illustrates a longitudinal section of the configuration of a principle part. FIG. 7 is a cross-sectional view taken along line J-J. The cross-sectional view basically illustrates only a cross section. For explanation, the projected shape of only a gas inlet port 203 is illustrated. A hollow arrow F1 indicates a flow of reformed hydrogen containing gas, a black arrow F2 indicates an air flow, and a cross hatching arrow F3 indicates a flow of mixed gas.

Air containing oxygen $O_2$ from an air inlet port 16a connected to a side wall flows into the air mixing space of a mixing part 16. Moreover, CO in hydrogen containing gas is reduced by a converting part 11 to a low concentration (0.5% or less), and then the hydrogen containing gas containing the low concentration of CO flows into the air mixing space of the mixing part 16 from the gas inlet port 203. The air and the hydrogen containing gas vertically collide with each other, and then are dispersed so as to start mixing. After that, mixed gas having traveled halfway around an outer passage 201 passes through a side hole 204 formed on the side of a partition plate and flows into a first intermediate passage 209. The mixed gas further travels halfway through the first intermediate passage 209, passes through a second side hole 204a, a second intermediate passage 210, and a third side hole 204b, and then flows into an inner passage 202. The subsequent flow is identical to that of the first embodiment.

The mixing passage of this configuration has a length of about 750 mm. The mixing distance is at least four times larger than that of the configuration of the fuel processor in FIG. 23, that is, about 180 mm with an identical output and a substantially equal product outside diameter. Thus, higher robustness can be obtained.

Currently, as indicated by dimension lines in FIG. 1, the heating unit 5 has an outside diameter of 79 mm and the fuel processor has an outside diameter of 144 mm in view of a catalyst amount determined by an output. The product outside diameter may be reduced by the development of small-size and low-output models and a catalyst having a honeycomb configuration. Also in this case, a mixing distance hardly changes, and thus the volume of the air mixing space of the mixing part 16 may relatively increase. Also in this case, this configuration can achieve sufficient mixing capability without increasing the air mixing space even if the outside diameter decreases.

As in the first embodiment, a partition plate 200 has tilted portions in the second embodiment. Specifically, tilted portions 23a, 23a2, 23a3, and 23b in FIG. 6 are provided. The tilted portions allow the elastic deformation of the outer tilted portion 23a, the inner tilted portion 23b, and the tilted portions 23a2 and 23a3 to eliminate a dimensional difference between the height of the partition plate 200 and the inner height of the mixing part 16 when a CO removing part 14 is attached.

(Third Embodiment)

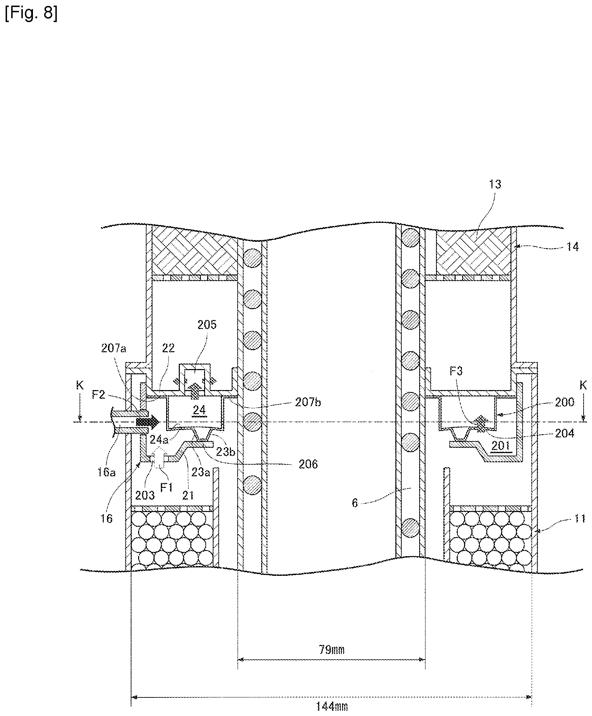

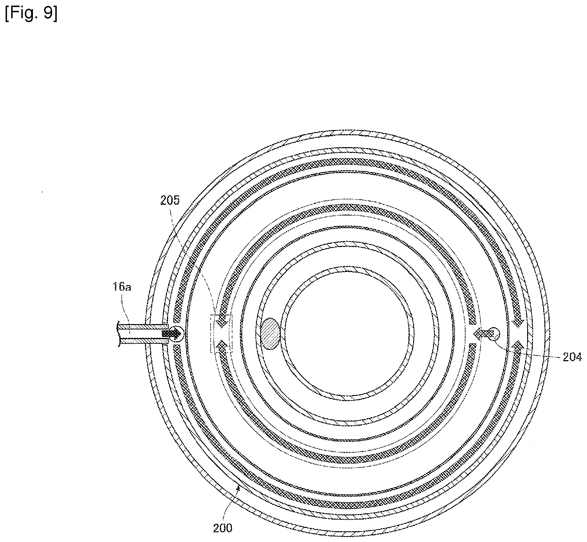

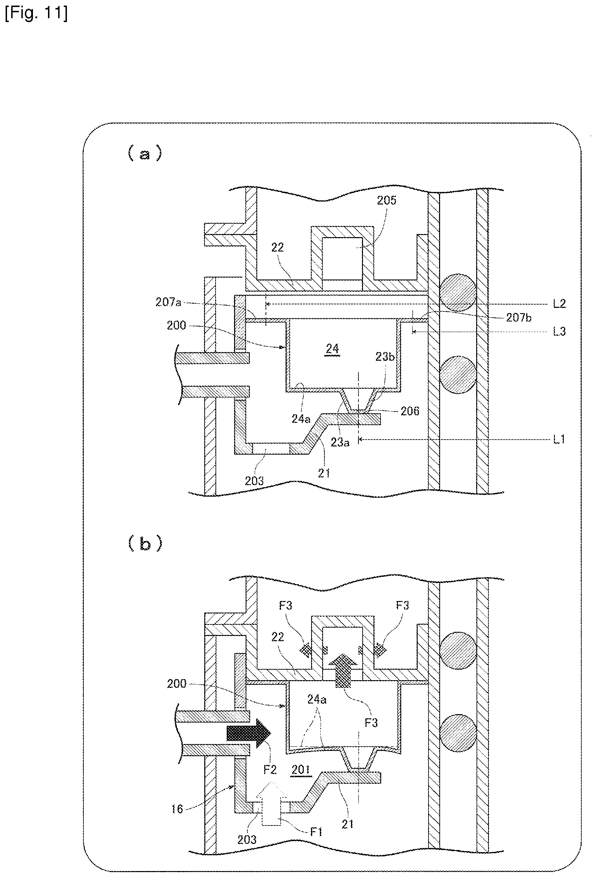

FIGS. 8 to 11 illustrate a third embodiment of the present invention.
In the second embodiment, a gas outlet 205 connecting from the mixing part 16 to the CO removing part 14 is formed on a part of the partition plate 200, whereas in the third embodiment, a gas outlet 205 is formed on a top plate 22 of a mixing part 16. A partition plate 200 of the third embodiment has a first contact portion 206 in contact with a bottom plate 21 of the mixing part 16 and second and third contact portions 207a and 207b in contact with the top plate 22 of the mixing part 16. The following relationships are obtained:
$L1 \neq L2 \neq L3$
$L2 > L1 > L3$
where L1 is a distance between the first contact portion 206 and a heating unit 5, L2 is a distance between the second contact portion 207a and the heating unit 5, and L3 is a distance between the third contact portion 207b and the heating unit 5 (FIG. 11(a)). Moreover, a groove 24 is formed between the second contact portion 207a and the third contact portion 207b of the partition plate 200 so as to protrude to the bottom plate 21. The first contact portion 206 is formed on a part of a bottom 24a of the groove 24. An outer tilted portion 23a is formed on a connecting portion between the outer side of the first contact portion 206 and the bottom 24a. An inner tilted portion 23b is formed on a connecting portion between the inner side of the first contact portion 206 and the bottom 24a.
FIG. 11 shows the step of attaching the partition plate 200 into the mixing part 16.
FIG. 11(a) shows the partition plate 200 having been inserted into the outer periphery of the heating unit 5 before the top plate 22 of the mixing part 16 is fixed. In this state, the first contact portion 206 of the partition plate 200 is in contact with the bottom plate 21 of the mixing part 16.
When the top plate 22 of the mixing part 16 is attached, as illustrated in FIG. 11(b), the second and third contact portions 207a and 207b of the partition plate 200 are pressed. The partition plate 200 is further pressed in a direction that reduces a clearance between the first contact portion 206 and the bottom plate 21 and a clearance between the second and third contact portions 207a and 207b and the top plate 22. Furthermore, the bottom 24a of the groove 24 is elastically deformed from a virtual line position to a solid line position. The outer tilted portion 23a and the inner tilted portion 23b are also slightly elastically deformed. In the state of FIG. 11(b), the top plate 22 is joined and fixed to a converting part 11 by welding, brazing, and so on.
Because of
"$L1 \neq L2 \neq L3$",
a part of the partition plate 200 is elastically deformed to eliminate a dimensional difference between the height of the partition plate 200 and the inner height of the mixing part 16, acting in a direction that reduces a clearance between the first contact portion 206 of the partition plate 200 and the bottom plate 21 and a clearance between the second and third contact portions 207a and 207b of the partition plate 200 and the top plate 22.
As illustrated in FIG. 9, an air flow (F2) into an outer passage 201 and a flow of reformed hydrogen containing gas (F1) flow together in a circumferential direction, and then the mixed gas flows into an inner passage 202 through a side hole 204 formed at 180 degrees from an inlet position. The mixed gas further flows together in the inner passage 202 in the circumferential direction, passes through a gas outlet 205, and then flows into a CO removing part 14.
In the third embodiment, a projecting portion having the outer tilted portion 23a and the inner tilted portion 23b is formed on a part of the bottom 24a of the groove 24 of the partition plate 200, forming the first contact portion 206.
The partition plate 200 brings the first contact portion 206 into contact with the bottom plate 21 and the second and third contact portions 207a and 207b into contact with the top plate 22 to elastically deform the bottom 24a of the groove 24 of the partition plate 200 so as to protrude to the top plate 22. The partition plate 200 may bring the first contact portion 206 into contact with the top plate 22 and the second and third contact portions 207a and 207b into contact with the bottom plate 21 to elastically deform the bottom 24a of the groove 24 of the partition plate 200 so as to protrude to the bottom plate 22.

(Fourth Embodiment)

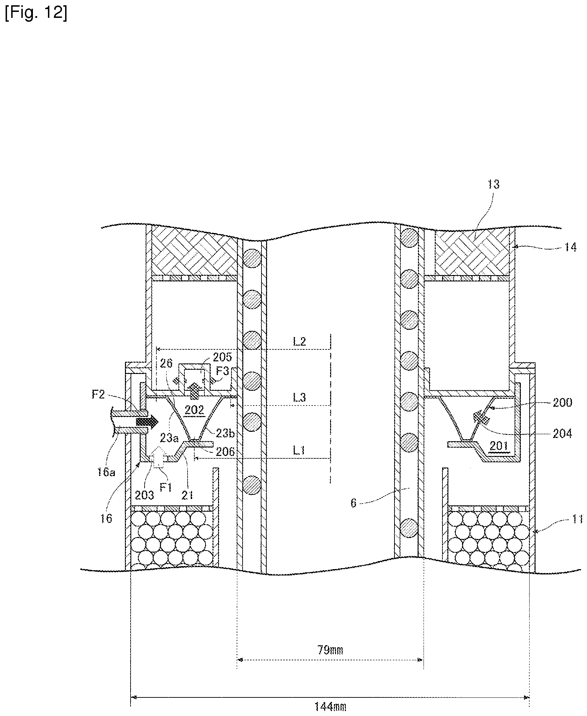

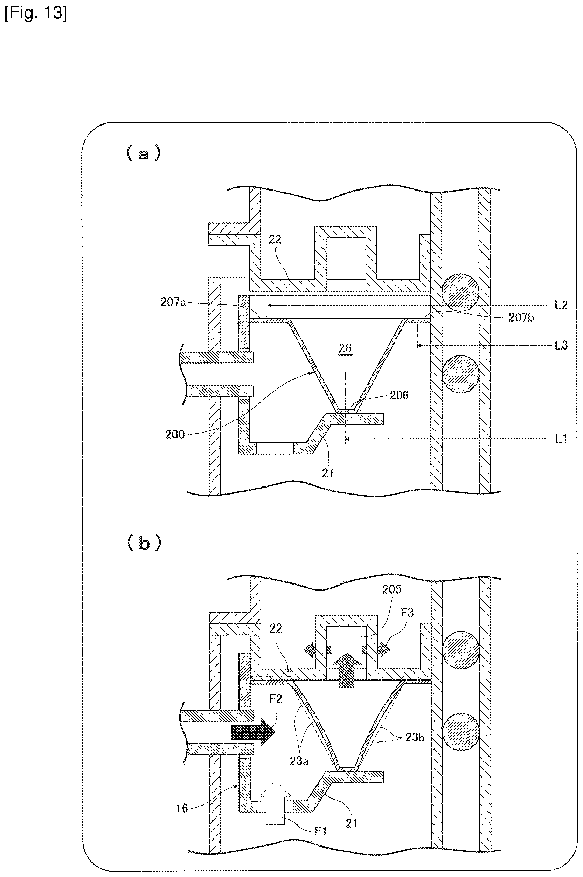

FIGS. 12 and 13 illustrate a fourth embodiment of the present invention.
The fourth embodiment is different from the third embodiment in the shape of a partition plate 200, but the same relationships
"$L1 \neq L2 \neq L3$" and "$L2 > L1 > L3$"
are obtained. In the fourth embodiment, a V groove 26 including an outer tilted portion 23a and an inner tilted portion 23b is formed between a second contact portion 207a and a third contact portion 207b of the partition plate 200. A first contact portion 206 is formed at the center of the bottom of the V groove 26.

FIG. 13 shows the step of attaching the partition plate 200 into a mixing part 16.

FIG. 13(a) shows the partition plate 200 having been inserted into the outer periphery of a heating unit 5 before a top plate 22 of the mixing part 16 is fixed. In this state, the first contact portion 206 of the partition plate 200 is in contact with a bottom plate 21 of the mixing part 16.

When the top plate 22 of the mixing part 16 is attached, as illustrated in FIG. 13(b), the second and third contact portions 207a and 207b of the partition plate 200 are pressed. The partition plate 200 is further pressed in a direction that reduces a clearance between the first contact portion 206 and the bottom plate 21 and a clearance between the second and third contact portions 207a and 207b and the top plate 22. Furthermore, the outer tilted portion 23a and the inner tilted portion 23b of the partition plate 200 are elastically deformed from a virtual line position to a solid line position. In the state of FIG. 13(b), the top plate 22 is joined and fixed to the converting part 11 by welding, brazing, and so on.

Because of

"L1 ≠ L2 ≠ L3",

a part of the partition plate 200 is elastically deformed to eliminate a dimensional difference between the height of the partition plate 200 and the inner height of the mixing part 16, acting in a direction that reduces a clearance between the first contact portion 206 of the partition plate 200 and the bottom plate 21 and a clearance between the second and third contact portions 207a and 207b of the partition plate 200 and the top plate 22.

An air flow (F2) into an outer passage 201 and a flow of reformed hydrogen containing gas (F1) are identical to those of the second embodiment.

(Fifth Embodiment)

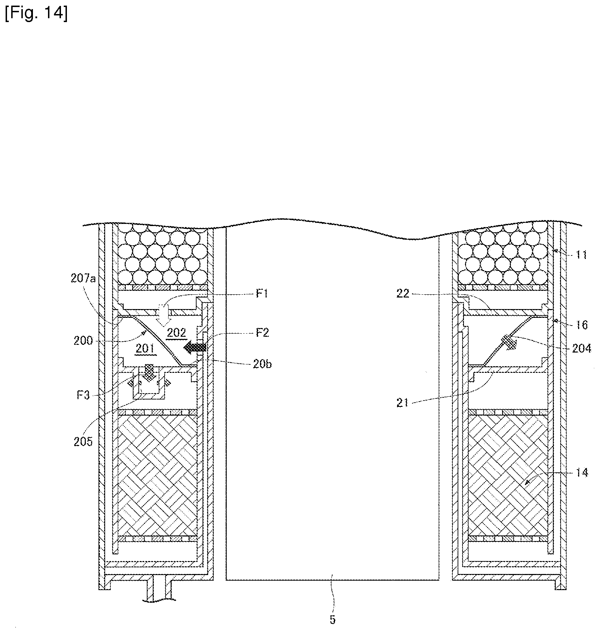

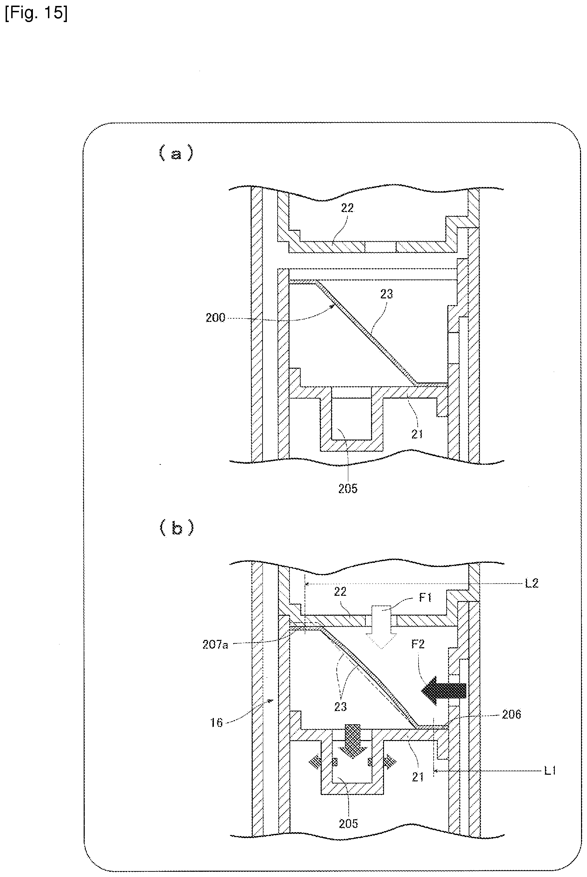

FIGS. 14 and 15 illustrate a fifth embodiment of the present invention.

In the foregoing embodiments, a flow of reformed hydrogen containing gas (F1) flows into the outer passage 201 of the mixing part 16 from the converting part 11 provided under the mixing part 16, and an air flow (F2) flows into the outer passage 201 from the outer periphery of the mixing part 16 and then flows into the CO removing part 14, which is disposed on the mixing part 16, from the inner passage 202 of the mixing part 16 through the gas outlet 205. In the fifth embodiment, a converting part 11 is formed on a mixing part 16 while a CO removing part 14 is disposed under the mixing part 16. A gas outlet 205 is formed on a bottom plate 21 of the mixing part 16.

The mixing part 16 is divided into an outer passage 201 and an inner passage 20 by a ring-shaped partition plate 200. The partition plate 200 includes a first contact portion 206 in contact with the bottom plate 21 on the inner periphery of the mixing part 16 and a first contact portion 206 in contact with the top plate 22 on the outer periphery of the mixing part 16.

The following relationships are obtained:

"L1 ≠ L2", "L2 > L1"

where L1 is a distance between the first contact portion 206 and a heating unit 5, and L2 is a distance between a second contact portion 207a and the heating unit 5. A ring-shaped tilted portion 23 is integrally formed between the first contact portion 206 and the second contact portion 207a.

FIG. 15 shows the step of attaching the partition plate 200 into the mixing part 16.

FIG. 15(a) shows the partition plate 200 having been inserted into the outer periphery of the heating unit 5 before a top plate 22 of the mixing part 16 is fixed. In this state, the first contact portion 206 of the partition plate 200 is in contact with the bottom plate 21 of the mixing part 16.

When the top plate 22 is attached, as illustrated in FIG. 15(b), the second contact portion 207a of the partition plate 200 is pressed. The partition plate 200 is further pressed in a direction that reduces a clearance between the first contact portion 206 and the bottom plate 21 and a clearance between the second contact portion 207a and a third contact portion 207b and the top plate 22. Furthermore, the tilted portion 23 is elastically deformed from a virtual line position to a solid line position. In the state of FIG. 11(b), the top plate 22 is joined and fixed to the CO removing part 14 by welding, brazing, and so on.

Because of

"L1 ≠ L2" and "L2 > L1",

a part of the partition plate 200 is elastically deformed to eliminate a dimensional difference between the height of the partition plate 200 and the inner height of the mixing part 16, acting in a direction that reduces a clearance between the first contact portion 206 of the partition plate 200 and the bottom plate 21 and a clearance between the second contact portion 207a of the partition plate 200 and the top plate 22.

As illustrated in FIG. 14, an air flow (F2) into an inner passage 202 and a flow of reformed hydrogen containing gas (F1) flow together in a circumferential direction, and then the mixed gas flows into the outer passage 201 through a side hole 204 formed at 180 degrees from an inlet position. The mixed gas further flows together in the outer passage 201 in the circumferential direction, passes through the gas outlet 205, and then flows into the CO removing part 14.

(Sixth Embodiment - not according to the invention

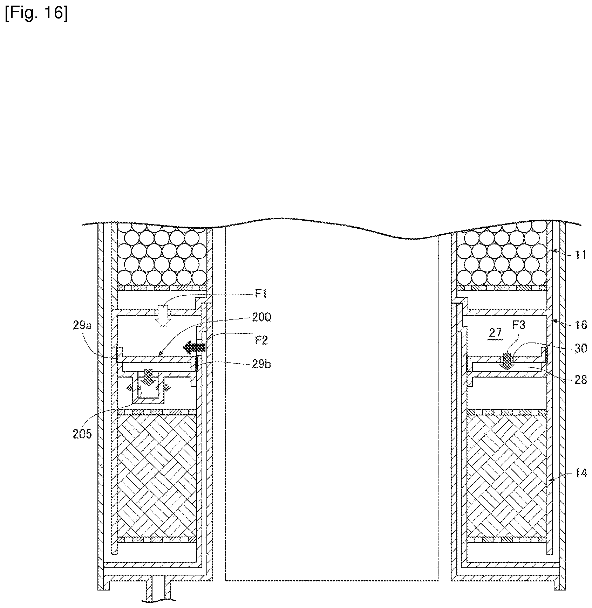

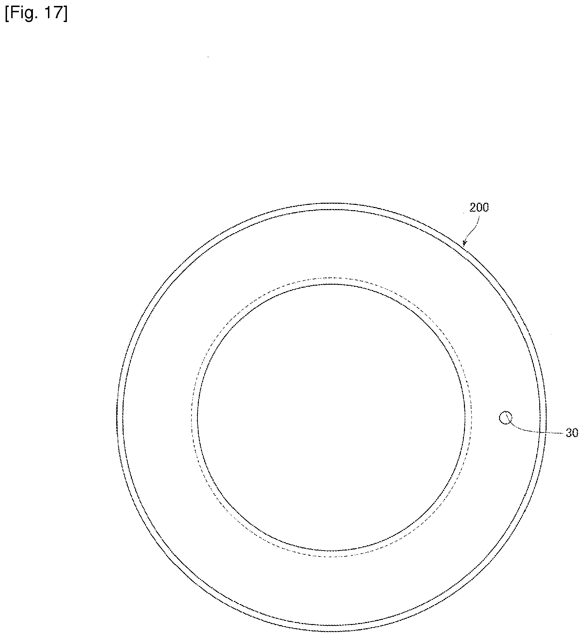

FIGS. 16 and 17 illustrate a sixth embodiment.

A converting part 11 is disposed on a mixing part 16 while a CO removing part 14 is disposed under the mixing part 16, which is similar to the configuration of the fifth embodiment. In the fifth embodiment, the inside of the mixing part 16 is divided into the outer passage 201 and the inner passage 202 by the partition plate 200, whereas in the sixth embodiment, the inside of the mixing part 16 is divided into an upper passage 27 and a lower passage 28 by a partition plate 200. The sixth embodiment is different from the fifth embodiment in that the ring-shaped partition plate 200 is joined and fixed to the inner surface of the mixing part 16 via 29a and 29b by welding, brazing, and so on.

An air flow (F2) into an inner passage 202 and a flow of reformed hydrogen containing gas (F1) pass together through the upper passage 27 in a circumferential direction, and then the mixed gas flows into the lower passage 28 through a hole 30 formed at 180 degrees from an inlet position. The mixed gas further passes through the lower passage 27 in the circumferential direction and then flows into the CO removing part 14 through a gas outlet 205.

(Seventh Embodiment)

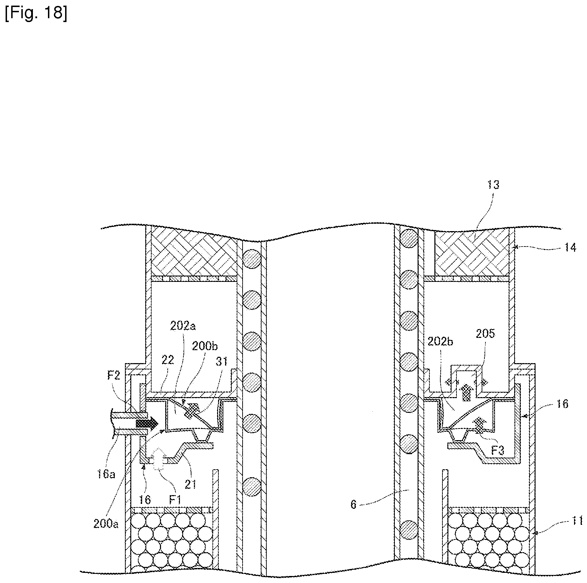

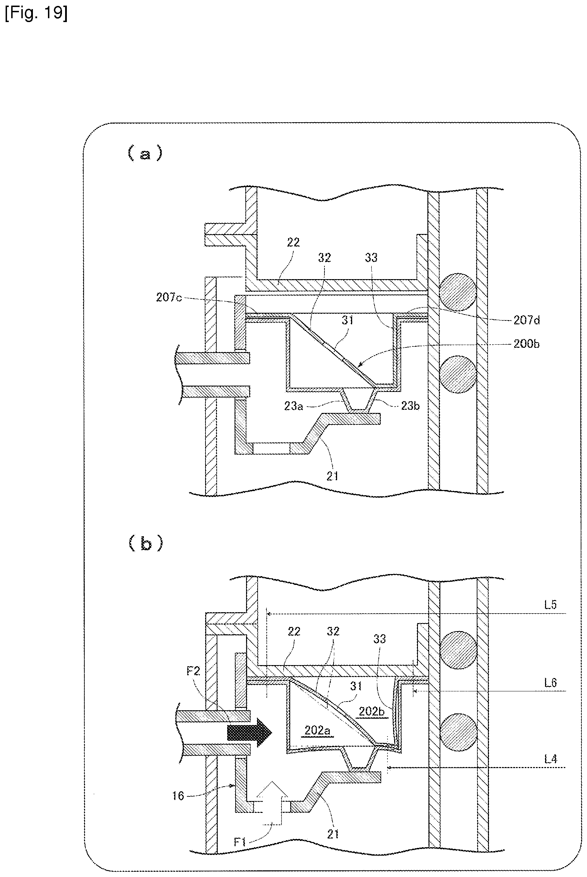

FIGS. 18 and 19 illustrate a seventh embodiment of the present invention.

In the foregoing embodiments, the inside of the mixing part 16 is divided into a plurality of passages by the ring-shaped partition plate 200. The seventh embodiment is different from the foregoing embodiments in that the inside of a mixing part 16 is divided into a plurality of passages by a plurality of ring-shaped partition plates.

A specific example of the seventh embodiment is a modification of the third embodiment illustrated in FIGS. 8 to 11. This modification can be similarly implemented in other embodiments.

As illustrated in FIG. 18, partition plates 200a and 200b are attached into the mixing part 16 to divide the mixing part 16 into an outer passage 201 and first and second inner passages 202a and 202b. The partition plate 200a is identical to the partition plate 200 of FIG. 3.

An air flow (F2) into the outer passage 201 and a flow of reformed hydrogen containing gas (F1) pass together through the outer passage 201 in a circumferential direction, and then the mixed gas flows into the first inner passage 202a through a side hole 204 formed at 180 degrees from an inlet position. The mixed gas further passes through the first inner passage 202a in the circumferential direction and flows into the second inner passage 202b through an inlet 31 formed on the partition plate 200b. The inlet 31 is formed at 180 degrees from the side hole 204 in the circumferential direction.

The mixed gas in the second inner passage 202b further flows in the circumferential direction therefrom, passes through a gas outlet 205 formed on a top plate 22, and flows into a third gas passage 12. The inside of the first inner passage 202a is further divided into the passages by the second inner passage 202b, achieving a longer passage length than in the third embodiment.

FIG. 19 shows the step of attaching the partition plates 200a and 200b into the mixing part 16.

FIG. 19(a) shows the partition plates 200a and 200b having been stacked and inserted into the outer periphery of a heating unit 5 before the top plate 22 of the mixing part 16 is fixed.

In this state, a first contact portion 206 of the partition plate 200a is in contact with a bottom plate 21 of the mixing part 16. Moreover, a fourth contact portion 206b of the partition plate 200b is in contact with a bottom 24a of a groove 24 on the partition plate 200a.

When the top plate 22 is attached, as illustrated in FIG. 19(b), a second contact portion 207a of the partition plate 200a is pressed through a fifth contact portion 207c of the partition plate 200b while a third contact portion 207b of the partition plate 200a is pressed through a sixth contact portion 207d of the partition plate 200b.

Hence, the bottom plate 24a of the partition plate 200a is elastically deformed from a virtual line position to a solid line position. Furthermore, a tilted portion 32 formed between the fourth contact portion 206b and the fifth contact portion 207c of the partition plate 200b and a side 33 formed between the fourth contact portion 206b and the sixth contact portion 207d of the partition plate 200b are also elastically deformed from virtual line positions to solid line positions. In the state of FIG. 19(b), the top plate 22 is joined and fixed to a converting part 11 by welding, brazing, and so on.

The following relationships are obtained:
"L1 ≠ L2 ≠ L3"
"L2 > L1 > L3"

Furthermore, the following relationships are obtained:
"L2 = L5, L3 = L6"
"L5 > L4 > L5"
where L4 is a distance between the fourth contact portion 206b and the heating unit 5, L5 is a distance between the fifth contact portion 207c and the heating unit 5, and L6 is a distance between the seventh contact portion 207d and the heating unit 5. Thus, a part of the partition plates 200a and 200b is elastically deformed to eliminate a dimensional difference between the height of the partition plates 200a and 200b and the inner height of the mixing part 16, acting in a direction that reduces a clearance between the first contact portion 206 and the bottom plate 21, a clearance between the second and third contact portions 207a and 207b of the partition plate 200a and the partition plate 200b, a clearance between the fourth contact portion 206b and the partition plate 200a, and a clearance between the partition plate 200b and the top plate 22.

In the seventh embodiment, a projecting portion having an outer tilted portion 23a and an inner tilted portion 23b is formed on a part of the bottom 24a of the groove 24 on the partition plate 200a, forming the first contact portion 206.

(Eighth Embodiment)

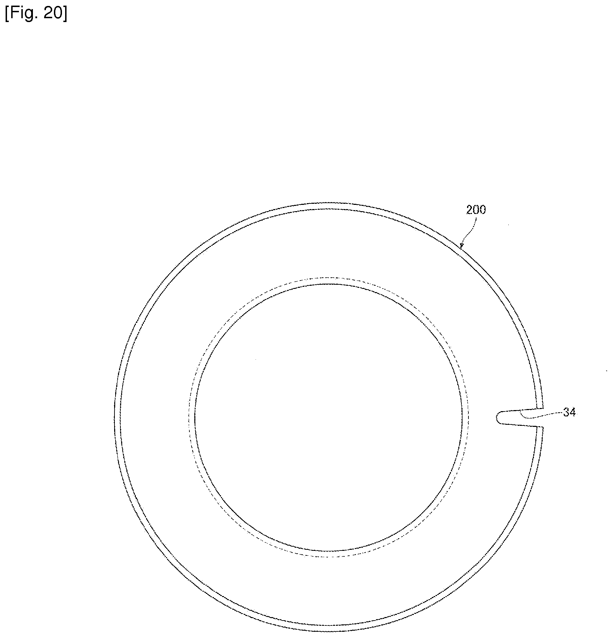

FIG. 20 illustrates an eighth embodiment of the present invention.

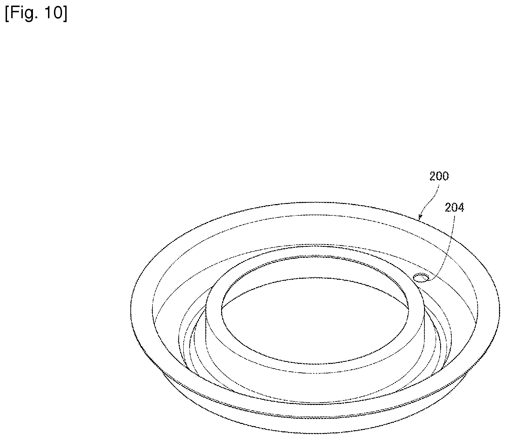

In the foregoing embodiments, mixed gas flows from one passage to another through the hole with the partition plate dividing the passage into the multiple passages. The hole may be replaced with a notch. Specifically, the side hole 204 is a circular hole in FIGS. 9 and 10 of the third embodiment and may be replaced with a notch 34 in FIG. 20.

In the foregoing embodiments other than the sixth embodiment, the partition plate is not joined or fixed to any one of the partition wall of the mixing part 16, the bottom plate 21 near the converting part 11, and the top plate 22 near the CO removing part 14 by welding, brazing, and so on. At least a part of the partition plate may be joined and fixed to one of the bottom plate 21 and the top plate 22 by welding, brazing, and so on.

**Industrial Applicability**

A fuel processor according to the present invention can remarkably improve the robustness of mixing capability with a simple structure without increasing a pressure loss. The fuel processor is used for fuel cells in, for example, a home cogeneration system to exhibit constant CO removal capability over a long continuous operation even if a load fluctuates.

**Reference Signs List**

1 fuel processor
1a heat insulating material
2 burner
3 heat chamber
4 exhaust passage
4a outlet port of the exhaust passage 4
5 heating unit
6 first gas passage
6a inlet of the gas passage 6
7 reforming catalyst
8 reforming part
9 second gas passage
10 CO converter catalyst
11 converting part
12 third gas passage
12a outlet port of the third gas passage
13 CO removal catalyst
14 CO removing part
15 heating coil
16 mixing part
16a air inlet port
17 hydrogen containing gas outlet port
21 bottom plate of the mixing part 16
22 top plate of the mixing part 16
23a outer tilted portion
23b inner tilted portion
L1 distance between the first contact portion 206 and the center of the heating unit 5
L2 distance between the second contact portion 207 and the center of the heating unit 5

24 groove
24a bottom of the groove 24
25 erect wall surface
26 V groove
27 upper passage
28 lower passage
29a, 29b welding and brazing points
30 hole
31 inlet
70 source gas
71 air
72 reformed water
73 hydrogen containing gas
74 exhaust gas
100 mixing passage
101 air inlet port
110 gas supply region
111 gas supply port
120 gas diffusion region
200, 200a, 200b partition plate
201 outer passage
202 inner passage
203 gas inlet port
204 side hole
204a second side hole
204b third side hole
205 gas outlet
206 first contact portion
207 second contact portion
207a, 207b second and third contact portions
208 inner contact portion
209 first intermediate passage
210 second intermediate passage

**Claims**

1.  A fuel processor comprising:

    a reforming part (8) provided around a heating unit (5) including a burner (2) and adapted to generate hydrogen containing gas composed of carbon monoxide and water;
    a converting part (11) provided around the heating unit (5) and adapted to generate hydrogen containing gas composed of low-concentration carbon monoxide by reacting carbon monoxide and water in the hydrogen containing gas generated in the reforming part (8);
    a mixing part (16) provided around the heating unit (5) and adapted to mix air supplied from an air inlet port (16a) and the hydrogen containing gas generated in the converting part (11); and
    a CO removing part (14) adapted to react oxygen, carbon monoxide in the gas supplied from the mixing part (16), and a CO removal catalyst (13) to generate hydrogen containing gas (73) hardly containing carbon monoxide,
    **characterized in that**
    the fuel processor further comprises a partition plate (200) dividing a passage of the mixing part (16), the partition plate (200) partially including a tilted portion (23a),
    wherein the mixing part (16) is formed between a first partition (21) near the converting part and a second partition (22), near the CO removing part, and a relationship is established below:
    $L1 \neq L2$

    where L1 is a distance from the heating unit (5) to a first contact portion (206), the first contact portion providing a contact between the partition plate (200) and one of the first and second partitions (21, 22), and

L2 is a distance from the heating unit (5) to a second contact portion (207), the second contact portion providing a contact between the partition plate (200) and the other of the first and second partitions (21, 22).

2. A fuel processor comprising:

a reforming part (8) provided around a heating unit (5) including a burner (2) and adapted to generate hydrogen containing gas composed of carbon monoxide and water;
a converting part (11) provided around the heating unit (5) and adapted to generate hydrogen containing gas composed of low-concentration carbon monoxide by reacting carbon monoxide and water in the hydrogen containing gas generated in the reforming part (8);
a mixing part (16) provided around the heating unit (5) and adapted to mix air supplied from an air inlet port (16a) and the hydrogen containing gas generated in the converting part (11); and
a CO removing part (14) adapted to react oxygen, carbon monoxide in the gas supplied from the mixing part (16), and a CO removal catalyst (13) to generate hydrogen containing gas (73) hardly containing carbon monoxide,
**characterized in that**
the fuel processor further comprises a partition plate (200) dividing a passage of the mixing part (16), the partition plate (200) partially including a tilted portion (23a),
wherein the mixing part (16) is formed between a first partition (21) near the converting part and a second partition (22), near the CO removing part, and a relationship is established below:
L1 ≠ L2 ≠ L3

where L1 is a distance from the heating unit (5) to a first contact portion (206), the first contact portion providing a contact between the partition plate (200) and one of the first and second partitions (21, 22),
L2 is a distance from the heating unit (5) to a second contact portion (207a), the second contact portion providing a contact between the partition plate (200) and one of the first and second partitions (21, 22), and
L3 is a distance from the heating unit (5) to a third contact portion (207b), the third contact portion providing a contact between the partition plate (200) and one of the first and second partitions (21, 22).

**Patentansprüche**

1. Brennstoff-Verarbeitungsvorrichtung, die umfasst:

einen Reformier-Teil (8), der um eine Heiz-Einheit (5) herum vorhanden ist, die einen Brenner (2) enthält, und zum Erzeugen von wasserstoffhaltigem Gas eingerichtet ist, das aus Kohlenmonoxid und Wasser besteht;
einen Umwandlungs-Teil (11), der um die Heiz-Einheit (5) herum vorhanden und so eingerichtet ist, dass er wasserstoffhaltiges Gas erzeugt, das aus niedrig konzentriertem Kohlenmonoxid besteht, indem er Kohlenmonoxid und Wasser in dem in dem Reformier-Teil (8) erzeugten wasserstoffhaltigen Gas zur Reaktion bringt;
einen Misch-Teil (16), der um die Heiz-Einheit (5) herum vorhanden ist und zum Mischen über eine Luft-Einlassöffnung (16a) zugeführter Luft und des in dem Umwandlungs-Teil (11) erzeugten wasserstoffhaltigen Gases eingerichtet ist; sowie
einen Teil zum Abbauen von CO (14), der so eingerichtet ist, dass er Sauerstoff, Kohlenmonoxid in dem von dem Misch-Teil (16) zugeführten Gas zur Reaktion bringt, und einen CO-Abbaukatalysator (13) zum Erzeugen von wasserstoffhaltigem Gas (73), das kaum Kohlenmonoxid enthält,
**dadurch gekennzeichnet, dass**
die Brennstoff-Verarbeitungsvorrichtung des Weiteren eine Trennplatte (200) umfasst, die einen Durchlass des Misch-Teils (16) unterteilt, wobei die Trennplatte (200) teilweise einen geneigten Abschnitt (23a) enthält,
wobei der Misch-Teil (16) zwischen einer ersten Trennwand (21) in der Nähe des Umwandlungs-Teils und einer zweiten Trennwand (22) in der Nähe des Teils zum Abbauen von CO ausgebildet ist und die folgende Beziehung besteht:
L1 ≠ L2

wobei L1 ein Abstand von der Heiz-Einheit (5) zu einem ersten Kontaktabschnitt (206) ist, und der erste Kontaktabschnitt einen Kontakt zwischen der Trennplatte (200) und der ersten oder der zweiten Trennwand (21, 22) herstellt, und
L2 ein Abstand von der Heiz-Einheit (5) zu einem zweiten Kontaktabschnitt (207) ist, wobei der zweite Kontaktabschnitt einen Kontakt zwischen der Trennplatte (200) und der anderen von der ersten und der zweiten Trennwand (21, 22) herstellt.

2. Brennstoff-Verarbeitungsvorrichtung, die umfasst:

einen Reformier-Teil (8), der um eine Heiz-Einheit (5) herum vorhanden ist, die einen Brenner (2) enthält, und zum Erzeugen von wasserstoffhaltigem Gas eingerichtet ist, das aus Kohlenmonoxid und Wasser besteht;
einen Umwandlungs-Teil (11), der um die Heiz-Einheit (5) herum vorhanden und so eingerichtet ist, dass er wasserstoffhaltiges Gas erzeugt, das aus niedrig konzentriertem Kohlenmonoxid besteht, indem er Kohlenmonoxid und Wasser in dem in dem Reformier-Teil (8) erzeugten wasserstoffhaltigen Gas zur Reaktion bringt;
einen Misch-Teil (16), der um die Heiz-Einheit (5) herum vorhanden ist und zum Mischen über eine Luft-Einlassöffnung (16a) zugeführter Luft und des in dem Umwandlungs-Teil (11) erzeugten wasserstoffhaltigen Gases eingerichtet ist; sowie
einen Teil zum Abbauen von CO (14), der so eingerichtet ist, dass er Sauerstoff, Kohlenmonoxid in dem von dem Misch-Teil (16) zugeführten Gas zur Reaktion bringt, und einen CO-Entfernungskatalysator (13) zum Erzeugen von wasserstoffhaltigem Gas (73), das kaum Kohlenmonoxid enthält,
**dadurch gekennzeichnet, dass**
die Brennstoff-Verarbeitungsvorrichtung des Weiteren eine Trennplatte (200) umfasst, die einen Durchlass des Misch-Teils (16) unterteilt, wobei die Trennplatte (200) teilweise einen geneigten Abschnitt (23a) enthält,
wobei der Misch-Teil (16) zwischen einer ersten Trennwand (21) in der Nähe des Umwandlungs-Teils und einer zweiten Trennwand (22) in der Nähe des Teils zum Abbauen von CO ausgebildet ist und die folgende Beziehung hergestellt wird:
L1 ≠ L2 ≠ L3

wobei L1 ein Abstand von der Heiz-Einheit (5) zu einem ersten Kontaktabschnitt (206) ist und der erste Kontaktabschnitt einen Kontakt zwischen der Trennplatte (200) und der ersten oder der zweiten Trennwand (21, 22) herstellt,
L2 ein Abstand von der Heiz-Einheit (5) zu einem zweiten Kontaktabschnitt (207a) ist, wobei der zweite Kontaktabschnitt einen Kontakt zwischen der Trennplatte (200) und der ersten oder der zweiten Trennwand (21, 22) herstellt, und
L3 ein Abstand von der Heiz-Einheit (5) zu einem dritten Kontaktabschnitt (207b) ist, wobei der dritte Kontaktabschnitt einen Kontakt zwischen der Trennplatte (200) und der ersten oder der zweiten Trennwand (21, 22) herstellt.

## Revendications

1. Convertisseur de combustible comprenant :

une partie de reformage (8) prévue autour d'une unité de chauffage (5) comportant un brûleur (2) et adaptée pour générer un gaz contenant de l'hydrogène composé de monoxyde de carbone et d'eau ;
une partie de conversion (11) prévue autour de l'unité de chauffage (5) et adaptée pour générer un gaz contenant de l'hydrogène composé de monoxyde de carbone à faible concentration en faisant réagir du monoxyde de carbone et de l'eau dans le gaz contenant de l'hydrogène généré dans la partie de reformage (8) ;
une partie de mélange (16) prévue autour de l'unité de chauffage (5) et adaptée pour mélanger l'air fourni par un orifice d'entrée d'air (16a) et le gaz contenant de l'hydrogène généré dans la partie de conversion (11) ; et
une partie d'élimination de CO (14) adaptée pour faire réagir l'oxygène, le monoxyde de carbone dans le gaz fourni par la partie de mélange (16) et un catalyseur d'élimination de CO (13) pour générer un gaz contenant de l'hydrogène (73) qui contient très peu de monoxyde de carbone,
**caractérisé en ce que**
le convertisseur de combustible comprend en outre une plaque de séparation (200) divisant un passage de la partie de mélange (16), la plaque de séparation (200) comportant partiellement une partie inclinée (23a),
dans lequel la partie de mélange (16) est formée entre une première séparation (21) à proximité de la partie de conversion et une deuxième séparation (22), à proximité de la partie d'élimination de CO, et une relation est établie ci-dessous :
L1 ≠ L2

où L1 est une distance entre l'unité de chauffage (5) et une première partie de contact (206), la première partie de contact assurant un contact entre la plaque de séparation (200) et l'une des première et deuxième séparations (21, 22), et

L2 est une distance entre l'unité de chauffage (5) et une deuxième partie de contact (207), la deuxième partie de contact assurant un contact entre la plaque de séparation (200) et l'autre des première et deuxième séparations (21, 22).

2.  Convertisseur de combustible comprenant :

une partie de reformage (8) prévue autour d'une unité de chauffage (5) comportant un brûleur (2) et adaptée pour générer un gaz contenant de l'hydrogène composé de monoxyde de carbone et d'eau ;

une partie de conversion (11) prévue autour de l'unité de chauffage (5) et adaptée pour générer un gaz contenant de l'hydrogène composé de monoxyde de carbone à faible concentration en faisant réagir du monoxyde de carbone et de l'eau dans le gaz contenant de l'hydrogène généré dans la partie de reformage (8) ;

une partie de mélange (16) prévue autour de l'unité de chauffage (5) et adaptée pour mélanger l'air fourni par un orifice d'entrée d'air (16a) et le gaz contenant de l'hydrogène généré dans la partie de conversion (11) ; et

une partie d'élimination de CO (14) adaptée pour faire réagir l'oxygène, le monoxyde de carbone dans le gaz fourni par la partie de mélange (16) et un catalyseur d'élimination de CO (13) pour générer un gaz contenant de l'hydrogène (73) qui contient très peu de monoxyde de carbone,

**caractérisé en ce que**

le convertisseur de combustible comprend en outre une plaque de séparation (200) divisant un passage de la partie de mélange (16), la plaque de séparation (200) comportant partiellement une partie inclinée (23a),

dans lequel la partie de mélange (16) est formée entre une première séparation (21) à proximité de la partie de conversion et une deuxième séparation (22), à proximité de la partie d'élimination de CO, et une relation est établie ci-dessous :

$L1 \neq L2 \neq L3$

où L1 est une distance entre l'unité de chauffage (5) et une première partie de contact (206), la première partie de contact assurant un contact entre la plaque de séparation (200) et l'une des première et deuxième séparations (21, 22),

L2 est une distance entre l'unité de chauffage (5) et une deuxième partie de contact (207a), la deuxième partie de contact assurant un contact entre la plaque de séparation (200) et l'une des première et deuxième séparations (21, 22), et

L3 est une distance entre l'unité de chauffage (5) et une troisième partie de contact (207b), la troisième partie de contact assurant un contact entre la plaque de séparation (200) et l'une des première et deuxième séparations (21, 22).

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

(a)

(b)

[Fig. 12]

[Fig. 13]

[Fig. 14]

[Fig. 15]

[Fig. 16]

[Fig. 17]

[Fig. 18]

[Fig. 19]

[Fig. 20]

[Fig. 21]

[Fig. 22]

[Fig. 23]

**EP 2 812 107 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007151152 A
- US 2004144029 A
- WO 2004101125 A1
- JP 4536153 B
- JP 4542205 B
- JP 2002187705 A
- JP 2011178613 A